# EUROPÄISCHE PATENTSCHRIFT

(11) **EP 2 856 887 B1**
(45) Veröffentlichungstag und Bekanntmachung des Hinweises auf die Patenterteilung: **31.01.2018**
(21) Anmeldenummer: 14187312.5
(22) Anmeldetag: 01.10.2014
(51) Int. Cl.: A23L 13/20, A23L 13/50, A23L 29/281

(54) **Verfahren zur Herstellung von Geflügelwurst**
Method for the preparation of poultry sausage
Procédé de fabrication de saucisse de volaille

(30) Priorität: 04.10.2013 DE 102013220159
(43) Veröffentlichungstag der Anmeldung: 08.04.2015
(73) Patentinhaber: Deutsches Institut für Lebensmitteltechnik e.V., 49610 Quakenbrück (DE)
(72) Erfinder: Bindrich, Dr. Ute, 49610 Quakenbrück (DE)
(74) Vertreter: Taruttis, Stefan Georg

(56) Entgegenhaltungen:
- WO-A1-99/51106
- WO-A2-2004/006845
- GB-A- 2 087 210
- "The Guide to Chicken Frankfurter Sausage", , 12. November 2007 (2007-11-12), Seiten 1-4, XP055166926, Gefunden im Internet: URL:http://www.gewuerz.de/addons/rezepte/e ng/guide_to_chicken_frankfurters.pdf [gefunden am 2015-02-03]
- Gerhard Feiner: "Meat products handbook", 1. Januar 2006 (2006-01-01), CRC Press, XP002735458, * *Seiten 133, 246-249, 492-493 *
- VALCHAR P; JANDASEK J: "Nové pohledy na technologie v masné výrobe V.", MASO, Bd. 18, Nr. 6, 2007, Seiten 51-55, XP009182333,
- Enrique Márquez ET AL: "FORMULACIÓN DE UN EMBUTIDO CON AGREGADO DE PIEL DE POLLO EMULSIFICADA CON SANGRE DE BOVINO Formulation of a Sausage Using Poultry Skin Emulsified with Bovine Blood", , 1. Januar 2006 (2006-01-01), Seiten 438-444, XP055166945, Gefunden im Internet: URL:http://www.scielo.org.ve/pdf/rc/v16n4/ art14.pdf [gefunden am 2015-02-03]
- LEMMERS H A M: "Milcheiweissadditie als Qualitätsverbesserer", FLEISCHEREI, Bd. 42, Nr. 10, 1991, Seiten 766-775, XP009182329,
- GMEZ-GUILLN M C ET AL: "Functional and bioactive properties of collagen and gelatin from alternative sources: A review", FOOD HYDROCOLLOIDS, ELSEVIER BV, NL, Bd. 25, Nr. 8, 8. Februar 2011 (2011-02-08), Seiten 1813-1827, XP028255533, ISSN: 0268-005X, DOI: 10.1016/J.FOODHYD.2011.02.007 [gefunden am 2011-02-15]

## Beschreibung

Die Erfindung betrifft ein Verfahren zur Herstellung eines schnittfesten Geflügelfetterzeugnisses und ein Verfahren zur Herstellung von Geflügelwurst allein auf Basis von Geflügel, bzw. ohne Zusatz von Schweinespeck oder Pflanzenfett. Das Verfahren und das damit erhältliche Geflügelfetterzeugnis bzw. die Geflügelwurst zeichnen sich dadurch aus, dass sie keinen Anteil von Fett von Säugetieren, insbesondere keinen Schweinespeck, oder Pflanzenfett aufweisen, sondern Protein und Fett ausschließlich von Geflügel stammen können. Das Geflügel kann Huhn bzw. Hahn (zusammen als Hähnchen bezeichnet), Truthahn bzw. Truthuhn (zusammen als Pute bezeichnet), Gans, Perlhuhn etc. sein. Das Geflügelfetterzeugnis kann aus Geflügelhaut hergestellt sein. Durch Mischen des Geflügelfetterzeugnisses mit Muskel- und/oder Bindegewebe von Geflügel und Lebensmittelzusatzstoffen, Kühlen, optional Räuchern und/oder Reifen kann Geflügelwurst hergestellt werden, in der das Geflügelfetterzeugnis feinverteilt und/oder als sichtbarer Partikel vorliegt. Die Fettphase der Geflügelwurst kann aus dem Geflügelfetterzeugnis bestehen und entsprechend kann das Geflügelfetterzeugnis als Fettphase von Lebensmitteln, insbesondere von Geflügelwurst, Verwendung finden.

### Stand der Technik

Fettgewebe aus Geflügel hat bei der Herstellung von Wurst den Nachteil, einen niedrigen Schmelzpunkt zu haben und z.B. bei Raumtemperatur auszuölen.

Der Erfindung stellt sich die Aufgabe, ein Verfahren und ein damit erhältliches Erzeugnis bereitzustellen, mit dem auf Basis von Geflügel, bevorzugt aus Geflügelbestandteilen ausgenommen Muskelgewebe, Geflügelfett in eine zur Wurstherstellung geeignete Form überführt werden kann. Eine bevorzugte Aufgabe liegt in der Bereitstellung eines Herstellungsverfahrens für Geflügelwurst, die keinen Anteil an Säugetierfett oder Pflanzenfett hat, bereitzustellen, wobei weiter bevorzugt Geflügelfett feinverteilt ist und/oder sichtbare und schnittfeste Partikel in der Geflügelwurst bildet.

"The guide to chicken Frankfurter sausage" beschreibt die Herstellung von Wienerwürstchen aus hautlosem Hühnerfleisch, das überdies kein Bindegewebe enthalten soll. Für beste Ergebnisse soll das Hühnerfleisch vor dem Einfüllen in einen Cutter durch eine 3 mm Platte gemahlen werden. Es wird angegeben, dass bis zu 30% Wasser zugesetzt werden kann, von dem 50 bis 100 % in Form von Eisflocken vorliegen sollte. Als Rohmaterial werden auch Hautemulsionen genannt.

Die GB 2087210 beschreibt für ein Lebensmittel das Kochen von Geflügelhaut, vorzugsweise nach Zerkleinerung, bei 100 bis 200 °C zur Verminderung des Wassergehalts bzw. zur Einstellung des Wassergehalts, mit dem anschließenden Einfrieren, insbesondere mit flüssigem Stickstoff.

Die Kopie XP-002735458, die als Auszug von Gerhard Feiner "Meat products handbook" im europäischen Recherchebericht bezeichnet wird, beschreibt, dass Emulsionen aus Hühnerhaut in Brühwurst eingesetzt werden. Die rohe Haut, vorzugsweise Hühnerhaut, wird mit Wasser geschnitten und in Mischung mit Sojaprotein und Eiswasser geschnitten, um ein gel-ähnliches Material erhalten.

Valchar et al, Technologie, MASO 6/07, 51-55 bezieht sich auf das Cuttern.

Marquez et al, Revista Cientifica, 438-444 (2006) beschreibt ausweislich der Zusammenfassung Geflügelhaut, die mit Rinderblut emulgiert wird.

Lemmers, Die Fleischerei 10/1991, 766-775 beschreibt den Einsatz von Natrium-Kaseinat als emulgierendes Protein in Geflügelprodukten.

### Allgemeine Beschreibung der Erfindung

Die Erfindung löst die Aufgabe mit den Merkmalen der Ansprüche, insbesondere mit einem Verfahren zur Herstellung eines Geflügelfetterzeugnisses mit den Schritten
- der Zerkleinerung einer ersten rohen bzw. ungegarten Geflügelhaut, insbesondere bis zum Zellaufschluss, insbesondere durch Wolfen und Kuttern, in Mischung mit Wasser, z.B. mit einem Gewichtsanteil von 1:0,5 bis 1:2, dem bevorzugt 0,7 bis 2 Gew.-%, bevorzugter 0,8 bis 1,2 Gew.-%, noch bevorzugter 0,9 bis 1 Gew.-% Salz (NaCl) zugesetzt sind, bevorzugt bei nur geringer Erwärmung, insbesondere bei ca. 0 bis 10 °C, bevorzugt 3 bis 5°C, zur Erzeugung einer ersten zerkleinerten rohen Geflügelhaut. Das Wasser kann als Eis und/oder flüssiges Wasser zugesetzt sein. Für die Zerkleinerung in Mischung mit Wasser ist die erste rohe bzw. ungegarte Geflügelhaut bevorzugt gewolft. Optional wird die rohe Geflügelhaut zunächst durch Wolfen zerkleinert und anschließend mit Wasser, dem bevorzugt Salz zugesetzt ist, vermischt und anschließend durch Kuttern weiter zerkleinert.
- einer ersten Wärmebehandlung der ersten zerkleinerten rohen Geflügelhaut bei 55°C bis 65 °C für 1 bis 2h zur Erzeugung erster wärmebehandelter zerkleinerter Geflügelhaut,
des Emulgierens der ersten wärmebehandelten zerkleinerten Geflügelhaut durch Feinvermahlung, z.B. mittels eines Rotor-Stator-Dispergierers, einer Kolloidmühle und/oder eines Kutters, zur Herstellung einer Emulsion. Bevorzugt findet das Emulgieren statt, bis die Emulsion eine helle Farbe aufweist, da diese die Feinverteilung von Fett anzeigt;
- der Zerkleinerung einer zweiten rohen bzw. ungegarten Geflügelhaut, insbesondere durch Wolfen und Kuttern, optional bis zum Zellaufschluss, bevorzugt bei nur geringer Erwärmung, insbesondere bei ca. 0 bis 10 °C, bevorzugt 3 bis 5°C, und Mischen mit Wasser, z.B. mit einem Gewichtsanteil von 1:0,25 bis 1:2, wobei dem Wasser bevorzugt 0,5 bis 2 Gew.-%, bevorzugter 0,8 bis 1,2 Gew.-%, noch bevorzugter 0,9 bis 1 Gew.-% Salz (NaCl) zugesetzt sind zur Erzeugung einer zweiten zerkleinerten rohen Geflügelhaut. Das Wasser bzw. die Salzlösung kann als Eis und/oder flüssiges Wasser zugesetzt sein. Bevorzugt erfolgt die Zerkleinerung durch Grobzerkleinerung, insbesondere Wolfen, der zweiten rohen Geflügelhaut und anschließendes Mischen mit Wasser, dem insbesondere Salz zugesetzt ist, zur Erzeugung der zweiten zerkleinerten rohen Geflügelhaut.
- einer zweiten Wärmebehandlung der zweiten zerkleinerten rohen Geflügelhaut bei 75 °C bis 85 °C für 1 bis 5h zur Erzeugung einer zweiten wärmebehandelten zerkleinerten Geflügelhaut,
- der Zerkleinerung der zweiten wärmebehandelten zerkleinerten Geflügelhaut, insbesondere durch Kuttern, optional bis zum Zellaufschluß, zur Herstellung einer Gelvorstufe,
- Temperieren der Emulsion und der Gelvorstufe auf etwa dieselbe Temperatur, die bevorzugt eine Temperatur mit einer Abweichung um maximal 5°C, bevorzugter um maximal 2°C, bevorzugter um maximal 1,5°C ist, und Mischen der Emulsion und der Gelvorstufe, z.B. im Massenverhältnis von 90:10 bis 50:50 Gelvorstufe:Emulsion, wobei die Temperatur 30°C bis 60°C, bevorzugter 45°C bis 55°C, noch bevorzugter maximal 50°C, z.B. 45 bis 50°C beträgt, zur Erzeugung einer Mischung, die die Emulsion und Gelvorstufe aufweist oder daraus besteht und
- Kühlen der Mischung aus Emulsion und Gelvorstufe, insbesondere auf 0 bis 7°C, bevorzugt auf maximal 3°C, zur Herstellung des erfindungsgemäßen Geflügelfetterzeugnisses. Dabei verfestigt sich die Mischung aus Emulsion und Gelvorstufe durch das Kühlen zum Geflügelfetterzeugnis. Bevorzugt erfolgt das Kühlen in einer maximalen Schichthöhe von 1 bis 5cm, z.B. in einer Schichthöhe von 2 bis 4cm, z.B. in einer Kühlkammer oder einem Kühltunnel.
- Optional können der Mischung aus Emulsion und Gelvorstufe vor dem Kühlen Bindegewebspartikel aus Geflügel zugemischt werden, so dass die Mischung die Emulsion, Gelvorstufe, Bindegewebspartikel und optional zugesetzte Lebensmittelzusatzstoffe aufweisen oder daraus bestehen kann. Die Bindegewebspartikel sind zerkleinert, bevorzugt gewolft, und gegart, weiter bevorzugt von heller Farbe. Die Bindegewebspartikel können zu 5 bis 30 Gew.-%, bevorzugter bis 20 Gew.-%, insbesondere zu 10 Gew.-%, bezogen auf die Masse der Mischung aus Emulsion und Gelvorstufe zugesetzt werden. Der Zusatz von Bindegewebspartikeln führt zur Erhöhung der Gelfestigkeit des Geflügelfetterzeugnisses. Diese Bindegewebspartikel können durch Garen von zerkleinerter, bevorzugt gewolfter Geflügelhaut, die bevorzugt hell ist, in wenig Wasser oder Dampf, Abtrennen von Flüssigkeit, z.B. durch Abzentrifugieren bei 5000 x g für 15 min hergestellt werden. Für das Garen kann Wasser bzw. Dampf z.B. in einem Massenverhältnis von 0,1 bis 0,5 bezogen auf die Masse Geflügelhaut verwendet werden. Das Garen kann z.B. bei 72 bis 120°C für 20min bis 4h erfolgen.
- Generell bevorzugt erfolgt die Zerkleinerung bei der Herstellung der ersten und optional der zweiten zerkleinerten rohen Geflügelhaut bei niedrigen Temperaturen, um bessere sensorische Eigenschaften zu erzielen, insbesondere einen Kochgeschmack zu vermeiden. Bevorzugt erfolgt die Zerkleinerung bei maximal 10°C, bevorzugter bei maximal 5, noch bevorzugter bei maximal 3 °C. Bevorzugt erfolgt das Zerkleinern der ersten und/oder der zweiten Geflügelhaut durch Kuttern und/oder unter Kühlung. Die erste und optional die zweite zerkleinerte rohe Geflügelhaut können durch dieselben Schritte erzeugt werden, aus jeweils einer unterschiedlichen oder aus der selben rohen Geflügelhaut, die von einer Geflügelart stammen kann eine Geflügelhautmischung sein kann, z.B. aus Puten- und Hähnchenhaut, durch Zerkleinern, insbesondere bis zum Zellaufschluss, insbesondere zunächst durch Wolfen und anschließendes Kuttern der gewolften Geflügelhaut in Mischung mit Wasser, z.B. mit einem Gewichtsanteil von 1:0,5 bis 1:2, dem bevorzugt 0,7 bis 2 Gew.-%, bevorzugter 0,8 bis 1,2 Gew.-%, noch bevorzugter 0,9 bis 1 Gew.-% Salz (NaCl) zugesetzt sind, bevorzugt bei nur geringer Erwärmung, insbesondere bei ca. 0 bis 10 °C, bevorzugt 3 bis 5°C. Das Wasser kann als Eis und/oder flüssiges Wasser zugesetzt sein.
- Weiter optional kann das durch Kühlen verfestigte Geflügelfetterzeugnis, optional zerkleinert, mit Salz, insbesondere festem Salz, kontaktiert werden und austretende Flüssigkeit kann abgetrennt werden, z.B. durch Abtropfenlassen des Geflügelfetterzeugnisses auf einer durchlässigen Unterlage, z.B. einem Sieb. Die Menge an Salz, mit der das Geflügelfetterzeugnis kontaktiert wird, ist frei wählbar, wobei eine einfache Lage an Salz, z.B. 0,1 bis 1mm, auf der Oberfläche des Geflügelfetterzeugnisses bevorzugt ist. Diese Reduktion des Flüssigkeitsgehalts des Geflügelfetterzeugnisses führt zu einer Erhöhung der Gelfestigkeit.

Als Wolfen wird generell eine Grobzerkleinerung verstanden, z.B. mittels einer Lochmühle bzw. eines Fleischwolfs, z.B. auf eine mittlere Partikelgröße von 5 bis 10 mm.

Für die Zwecke der Erfindung wird der noch flüssige Gelanteil des Geflügelfetterzeugnisses, das aus der zweiten Geflügelhaut erzeugt wird, vor dem Gelieren bzw. vor dem Kühlen als Gelvorstufe bezeichnet.

Die Geflügelhaut stammt bevorzugt von Puten oder Hähnchen und ist bevorzugt frei von Bestandteilen anderer Tiere, insbesondere frei von Säugetierfett, und frei von Pflanzenfett. Bevorzugt ist die Geflügelhaut Geflügelbrusthaut. Die erste und die zweite Geflügelhaut kann dieselbe Zusammensetzung aufweisen, z.B. 100 % Puten- oder 100 % Hähnchenhaut oder eine Mischung aus Geflügelbrusthaut von Hähnchen und Pute, z.B. 10 bis 90% Hähnchen, bevorzugt 30%, bevorzugter 50%, noch bevorzugter 70% oder 80%, Rest jeweils Pute.

Das Geflügelfetterzeugnis hat einen Helligkeitswert L* von mindestens 80 und eignet sich daher als Fettphase in Geflügelwurst. Die Druckfestigkeit des Geflügelfetterzeugnisses ist ohne zugemischtes Bindegewebe für eine Fettphase in Geflügelwurst ausreichend hoch und beträgt z.B. von 4800 bis mindestens 5500Pa. Der aus dem Geflügelfetterzeugnis extrahierbare Fettanteil liegt bei 50 bis 65%, insbesondere bei 55 bis 63%, wenn die Geflügelhaut Geflügelbrusthaut, 70% Hähnchen und 30% Pute, ist und zeigt eine hinreichende Stabilisierung des Fetts. Mit zugemischtem Bindegewebe kann eine Druckfestigkeit des Geflügelfetterzeugnisses von zumindest 15000Pa, bevorzugt mindestens 20000Pa, bevorzugter von mindestens 22000Pa bis 25000Pa erreicht werden.

Die Temperaturstabilität des Geflügelfetterzeugnisses ist mit einer Grenztemperatur für die Verflüssigung von mindestens 34°C, bevorzugt mindestens 35°C ausreichend. Bis zu Temperaturen von ca. 10°C ist die Festigkeitsminderung sehr gering, oberhalb von 10°C wird das Geflügelfetterzeugnis weicher, bleibt aber formstabil. Das Geflügelfetterzeugnis geliert thermoreversibel, so dass es sich bei Überschreiten der Grenztemperatur der Temperaturstabilität verflüssigt und nach Kühlen auf unterhalb dieser Grenztemperatur wieder verfestigt. Es ist daher bevorzugt, dass das Verfahren bevorzugt bei Temperaturen von maximal 10°C, bevorzugt maximal 7°C, bevorzugter maximal 5°C abläuft. Die Lagertemperatur des Geflügelfetterzeugnisses sollte 25°C nicht überschreiten.

Das Geflügelfetterzeugnis kann als Fettphase bei der Herstellung von Geflügelwurst, insbesondere Geflügelrohwurst, verwendet werden.

Das Geflügelfetterzeugnis kann zur Herstellung von Geflügelrohwurst verwendet werden, z.B. von grober Geflügelrohwurst durch
- Zerkleinern des gekühlten Geflügelfetterzeugnisses, z.B. durch Würfelschneiden, Wolfen oder Kuttern, bevorzugt unter Kühlen,
- Zerkleinern von gekühltem Geflügelmagerfleisch, bevorzugt unter Kühlen, z.B. durch Wolfen oder Kuttern,
- Mischen des zerkleinerten Geflügelfetterzeugnisses und des zerkleinerten Geflügelmagerfleischs unter Zusatz von Lebensmittelzusatzstoffen, insbesondere Salz, Gewürzen und Starterkultur,
- Abfüllen, z.B. in Wursthüllen,
- optional Vortrocknen,
- optional Kalträuchern,
- Reifen.

Bevorzugt sind das Geflügelfetterzeugnis und das Geflügelmagerfleisch vor dem Zerkleinern gekühlt, z.B. auf max. 10°C, bevorzugt auf max. 5°C, bevorzugter auf max. 3°C.

Die Lebensmittelzusatzstoffe sind insbesondere ausgewählt unter Salz, Nitrit, Phosphat, Gewürzen, Starterkulturen, Haltbarkeitsmittel und/oder Zucker, z.B. Lactose, Glukose und/oder Fruktose. Als Gewürz können Kräuter, Senf, Flüssigrauch etc. verwendet werden.

### Genaue Beschreibung der Erfindung

Die Erfindung wird nun genauer anhand von Beispielen mit Bezug auf die Figuren beschrieben, die in
- Figur 1 die durch Sieben bestimmten Größenverteilungen der ersten zerkleinerten rohen Geflügelhaut,
- Figur 2 die volumetrischen Phasenanteile der ersten zerkleinerten rohen Geflügelhaut,
- Figur 3 die Grenzflächenspannung der wässrigen Phase der ersten zerkleinerten rohen Geflügelhaut,
- Figur 4 die relativen Molekülgrößen löslicher Proteine der ersten zerkleinerten rohen Geflügelhaut als Retentionszeiten der Gelpermeationschromatographie,
- Figur 5 die Helligkeitswerte für den wässrigen Überstand der ersten zerkleinerten rohen Geflügelhaut nach erster Wärmebehandlung,
- Figur 6 die Farbwerte für den wässrigen Überstand der ersten zerkleinerten rohen Geflügelhaut nach erster Wärmebehandlung,
- Figur 7 die Grenzflächenaktivität für den wässrigen Überstand der ersten zerkleinerten rohen Geflügelhaut nach erster Wärmebehandlung,
- Figur 8 die Emulgatorkapazität für den wässrigen Überstand der ersten zerkleinerten rohen Geflügelhaut nach erster Wärmebehandlung,
- Figur 9 die relativen Molekülgrößen löslicher Proteine der ersten erwärmten zerkleinerten Geflügelhaut für verschieden lange erste Wärmebehandlungen als Retentionszeiten der Gelpermeationschromatographie,
- Figur 10 die Grenzflächenaktivität für erste wärmebehandelte zerkleinerte Geflügelhaut nach verschiedenen Zeiten für die erste Wärmebehandlung,
- Figur 11 die Emulgatorkapazität für erste wärmebehandelte zerkleinerte Geflügelhaut nach verschiedenen Zeiten für die erste Wärmebehandlung,
- Figur 12 die Analyse des Fetts, das aus dem abgekühlten Gel aus zweiter wärmebehandelter zerkleinerter Geflügelhaut nach verschiedenen zweiten Wärmebehandlungen extrahierbar ist,
- Figur 13 die Druckfestigkeit des abgekühlten Gels aus zweiter wärmebehandelter zerkleinerter Geflügelhaut nach verschiedenen zweiten Wärmebehandlungen,
- Figur 14 den extrahierbaren Fettanteil des abgekühlten Gels aus zweiter wärmebehandelter zerkleinerter Geflügelhaut nach verschiedenen zweiten Wärmebehandlungen,
- Figur 15 die Druckfestigkeit der wärmebehandeltem zweiten zerkleinerten Geflügelhaut in Abhängigkeit von der zweiten Wärmebehandlung,
- Figur 16 in A - F mikroskopische Aufnahmen des Geflügelfetterzeugnisses für verschiedene Mischungsverhältnisse aus Emulsion (Emulsionsphase) und Gelvorstufe (Gelphase) ohne Bindegewebspartikel
- Figur 17 in A - F rasterelektronenmikroskopische Aufnahmen des Geflügelfetterzeugnisses für verschiedene Mischungsverhältnisse aus Emulsion (Emulsionsphase) und Gelvorstufe (Gelphase) ohne Bindegewebspartikel,
- Figur 18 Werte für den aus dem Geflügelfetterzeugnis extrahierbaren Fettanteil für verschiedene Mischungsverhältnisse aus Emulsion und Gelvorstufe (Gel) ohne Bindegewebspartikel,
- Figur 19 in A und B die Helligkeit bzw. Farbe des Geflügelfetterzeugnisses für verschiedene Mischungsverhältnisse aus Emulsion und Gelvorstufe (Gel) ohne Bindegewebspartikel,
- Figur 20 die Druckfestigkeit des Geflügelfetterzeugnisses für verschiedene Mischungsverhältnisse aus Emulsion und Gel ohne Bindegewebspartikel,
- Figuren 21 bis 23 die Temperaturstabilität des Geflügelfetterzeugnisses für verschiedene Mischungsverhältnisse aus Emulsion und Gel,
- Figur 24 die Druckfestigkeit des Geflügelfetterzeugnisses mit einem Gehalt an Bindegewebspartikeln und in
- Figur 25 die Feuchte des Geflügelfetterzeugnisses mit einem Gehalt an Bindegewebspartikeln zeigen.

In den Figuren ist bei Dreifachbestimmungen die Standardabweichung angezeigt, ohne angegebene Abweichung ist der Mittelwert von Doppelbestimmungen angezeigt.

### Beispiel: Herstellung des Geflügelfetterzeugnisses

Als zerkleinerte Geflügelhaut wurde eine gewolfte rohe Mischung aus 70 Gew.-% Hähnchenbrusthaut und 30 Gew.-% Putenbrusthaut eingesetzt, die einen Wassergehalt von 42,5 (Charge 1) bis 38,5 Gew.-% (Charge 2), 46,2 (Charge 1) bis 49,5 Gew.-% (Charge 2) Fett, 9,78 (Charge 1) bzw. 10,8 (Charge 2) Gew.-% Gesamtprotein nach Kjeldahl (N * 6,25), 0,82 (Charge 1) bis 0,90 Gew.-% Nichtproteinstickstoff nach ASU L07.00-14 und 4,38 (Charge 1) bis 4,84 Gew.-% Bindegewebe.

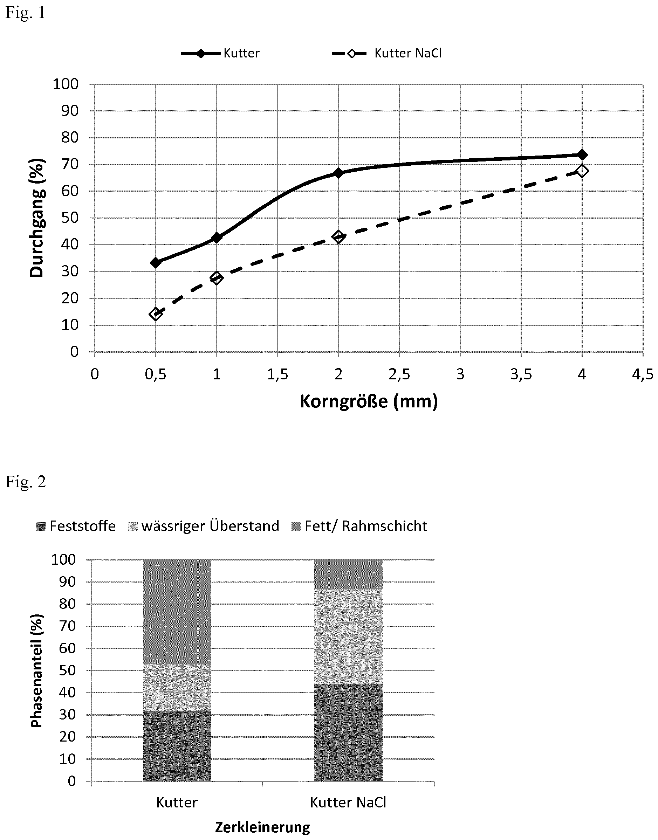

Die weitere Zerkleinerung der Geflügelhaut erfolgt durch Kuttern einer 1:1 Mischung mit Wasser, das in Form von Eiswasser während 10 Runden Kuttern bei 1500 Upm zugegeben wurde, anschließend 220 Runden Kuttern bei 5000 Upm. Alternativ erfolgte die Zerkleinerung mit 1:1 0,95 Gew.-% Salzlösung (NaCl). Als weitere Alternative kann die Zerkleinerung mit Eiswasser bzw. 0,95 Gew.-% Salzlösung mittels Kuttern für 10 Runden bei 1500 Upm mit anschließender Feinvermahlung in einer Mühle erfolgen, bevorzugt unter Kühlung, insbesondere auf maximal 5°C, bevorzugt 3°C der Mischung. Die Partikelgrößen wurden mittels Nasssiebung mit Normsieben bestimmt. Die Partikelgrößen sind als % Durchgang durch die Siebe in Figur 1 dargestellt. Das Ergebnis zeigt, dass mittels Kuttern eine effektive Zerkleinerung erreicht wird, wobei Salzlösung beim Kuttern zu einer weniger effektiven Zerkleinerung als Wasser führt.

Die Partikelgrößen der Fraktionen von <1mm wurden mittels Laserbeugung (Malvern Mastersizer 2000, suspendiert in tetra-Natriumpyrophosphatlösung) als Sauterdurchmesser bestimmt. Die Zerkleinerung durch Kuttern ergab einen Sauterdurchmesser von 66,8µm.

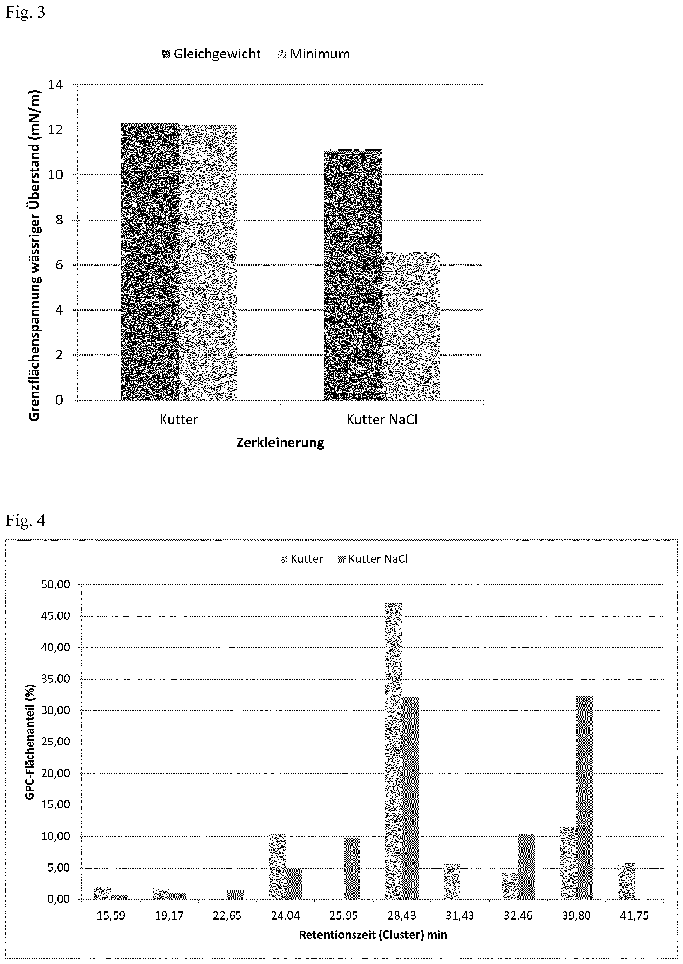

Die durch das Zerkleinern erzeugten Suspensionen wurden zentrifugiert, um die Anteile der erzeugten Phasen zu bestimmen. Dabei zeigte sich, der größte Anteil wässriger Phase durch Kuttern mit salzhaltigem Wasser erzeugt wurde. Das Ergebnis ist in Figur 2 graphisch dargestellt, nämlich für die Zerkleinerungsverfahren mit Wasser (Kutter) und mit Salzlösung (Kutter NaCl). In Figur 2 zeigt jeweils der untere Abschnitt einer Säule den Feststoff, der mittlere Abschnitt den wässrigen Überstand und der obere Abschnitt Fett/Rahmschicht. Die Messung der Grenzflächenspannung (dynamische Grenzflächenspannung, gemessen mittels Tropfenvolumentensiometer DVT50 (KRÜSS) gegen Neutralöl) der jeweiligen wässrigen Phasen der Suspensionen zeigten ein Optimum der Gleichgewichtswerte und der Minimalwerte für die Zerkleinerung mittels Kuttern in Salzlösung; die Ergebnisse sind in Figur 3 gezeigt. Dabei zeigt ein geringer Minimalwert (rechte Säule, Minimum) und ein geringer Gleichgewichtswert (linke Säule, Gleichgewicht) gute Emulsionsbildung bzw. Langzeitstabilität der Emulsion an. Auch die Messung des extrahierbaren Fettanteils (durch Mischen und Ausschütteln mit Lösungsmittel, bevorzugt Petroleumbenzin, anschließendes Abfiltrieren, wobei extrahiertes Fett nach Verdampfen des Lösungsmittels bestimmt wird) der Suspensionen zeigt, das durch Kuttern in Salzlösung (ca. 61% von Gesamtfett) ein gegenüber Kuttern in Wasser (ca. 77% von Gesamtfett) ein verbesserter Grenzflächenzustand (geringere Fettextraktion) erreicht wird.

Die Analyse der Größenverteilung von gelösten Proteinen der wässrigen Phasen, die durch Kuttern in Wasser oder Salzlösung erzeugt wurden, mittels Gelpermeationschromatographie (GPC, Waters 2695 Alliance Separations Module mit Waters 2996 Photodiodenarraydetektor, Waters, USA; Säule: Superdex 200 10/300 GL (GE Healthcare, Freiburg); isokratisch mit 0,5ml/min 0.15M Dinatriumphosphat, 1 Gew.-% NaCl, pH 6,8) zeigte, dass jeweils ein relativ kleiner Anteil hoher Molekülgrößen erzeugt wurden und bei Kuttern in Salzlösung der Anteil hoher Molekülgrößen höher ist als durch Kuttern in Wasser erzeugt wird. Die Ergebnisse sind in Figur 4 gezeigt, in der höhere Retentionszeiten kleinere Moleküle anzeigen; die Anteile sind als detektierte Flächenanteile (GPC-Flächenanteile (%)) gezeigt, linke Säulen Kuttern in Wasser (Kutter), rechte Säulen Kuttern in Salzlösung (Kutter NaCl). Der höhere Anteil von gelöstem Protein geringerer Molekülgröße bei Zerkleinern in Salzlösung stützt die nachfolgend dargestellten besseren Emulgatoreigenschaften.

Entsprechend ist bevorzugt, dass das Zerkleinern zur Erzeugung der ersten zerkleinerten rohen Geflügelhaut mittels Kuttern mit Salzlösung erfolgt.

Die erste Wärmebehandlung der ersten zerkleinerten rohen Geflügelhaut erfolgte nach Kuttern in 1:1 Salzlösung, wie generell bevorzugt. Dabei wird eine Temperatur von 55 bis 65°C für 1h bis 2h bevorzugt, insbesondere von 60°C für 1,5h, da für diese erste Wärmebehandlung die günstigste Kombination aus Helligkeit, Farbe, Grenzflächenspannung und Emulgatorkapazität ergab. Die Farben wurden im L* a* b*-Farbraum bestimmt, in dem L* = Helligkeit, 0=Schwarz, 100=Weiß; +a*=Rot, -a*=Grün, +b*=Gelb, -b*=Blau, jeweils von +60 bis -60 (gemessen mittels Spektralphotometer CM-600d, Konica-Minolta bei Normlicht D65). Dieser Farbraum hat eine gute Übereinstimmung von geometrischem und empfundenem Farbabstand.

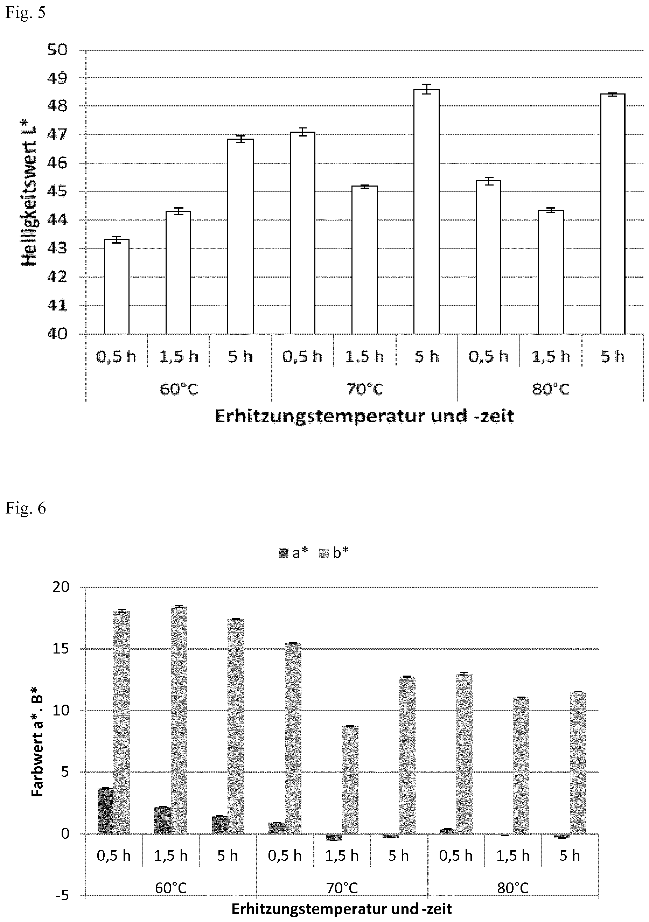

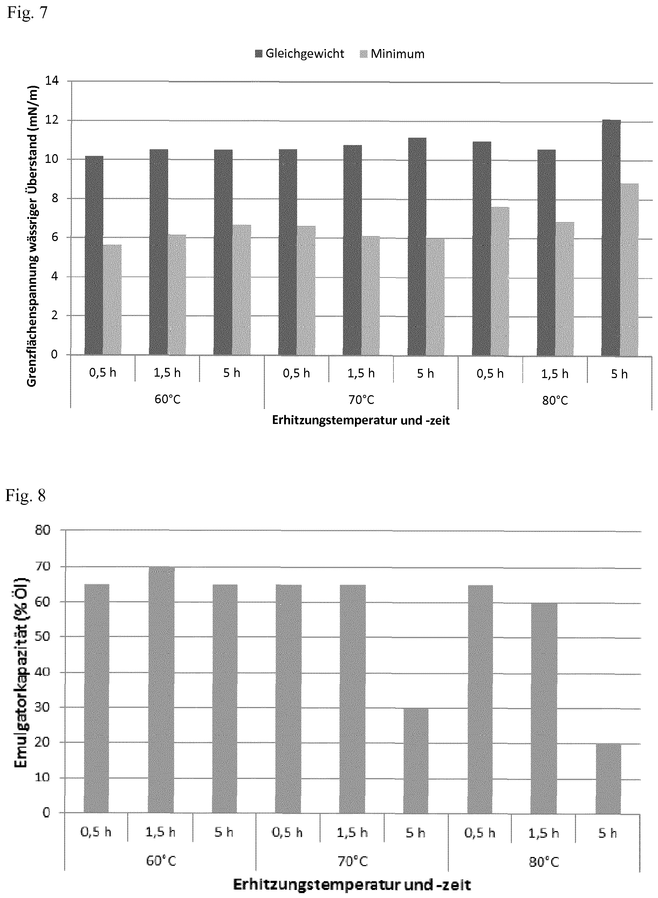

Figur 5 zeigt die Helligkeitswerte L* nach erster Wärmebehandlung bei 60°C, 70°C, 80°C, jeweils für 0,5h, 1h bzw. 5h, Figur 6 die Farbwerte a* (linke Säule) und b* (rechte Säule). Die Helligkeits- und Farbwerte zeigen, dass die erste Wärmebehandlung jeweils eine erste wärmebehandelte zerkleinerte Geflügelhaut mit annehmbarem Erscheinungsbild ergibt. Figur 7 zeigt die Grenzflächenspannung (Gleichgewicht linke Säule, Minimum rechte Säule) (Tropfenvolumentensiometer DVT 50) des wässrigen Überstands nach der ersten Wärmebehandlung (erste wärmebehandelte zerkleinerte Geflügelhaut), Figur 8 die Emulgatorkapazität (Bestimmung der maximalen Ölmenge, die im Laborversuch emulgiert wird). Diese Ergebnisse zeigen, dass die optimale Kombination von Grenzflächenspannung und Emulgatorkapazität für eine erste Wärmebehandlung im Bereich von 55 bis 65°C, bevorzugt 60°C, für 0,5h bis 2h, insbesondere für ca. 1h erzielt wird

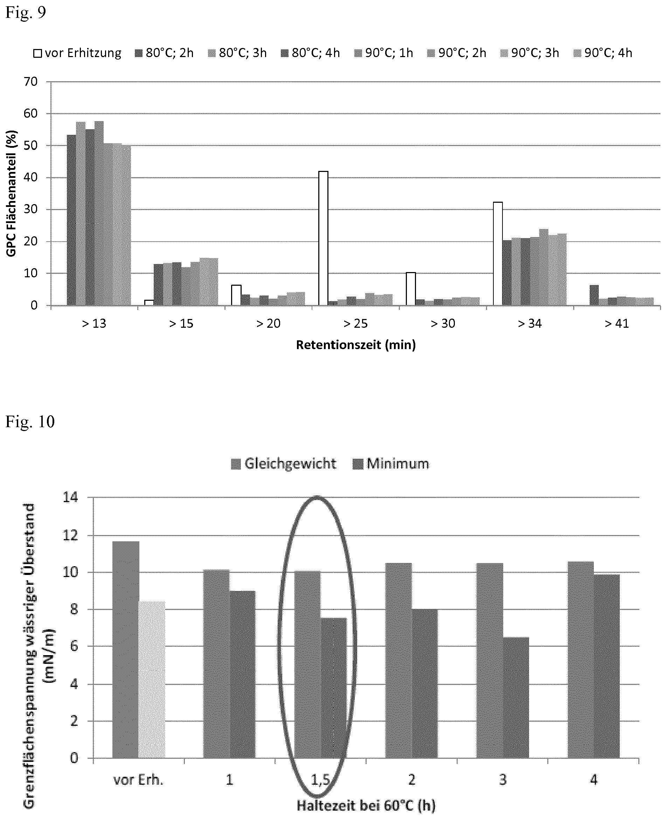

Die Analyse des Proteingehalts nach erster Wärmebehandlung bei 60°C für 1h bis 4h zeigten, dass durch die erste Wärmebehandlung der Gehalt an löslichem Protein der ersten erwärmten zerkleinerten Geflügelhaut gegenüber der ersten zerkleinerten rohen Geflügelhaut nach 1h etwa verdoppelt war und durch längere Behandlungszeit kaum zunimmt. Die Analyse der löslichen Proteine mittels GPC zeigte, dass bereits eine erste Wärmebehandlung bei 60°C für 1h eine signifikante Verringerung der Molekülgrößen ergab, längere Behandlungszeiten jedoch kaum zu einer weiteren Steigerung kleiner Molekülgrößen führt. Figur 9 zeigt die Ergebnisse der GPC, wobei die Säulen jeder Gruppe in der Reihenfolge der Legende der Fig. 9 angeordnet sind; bei >13 und >41 liegt der Wert für "vor Erhitzung" bei Null.

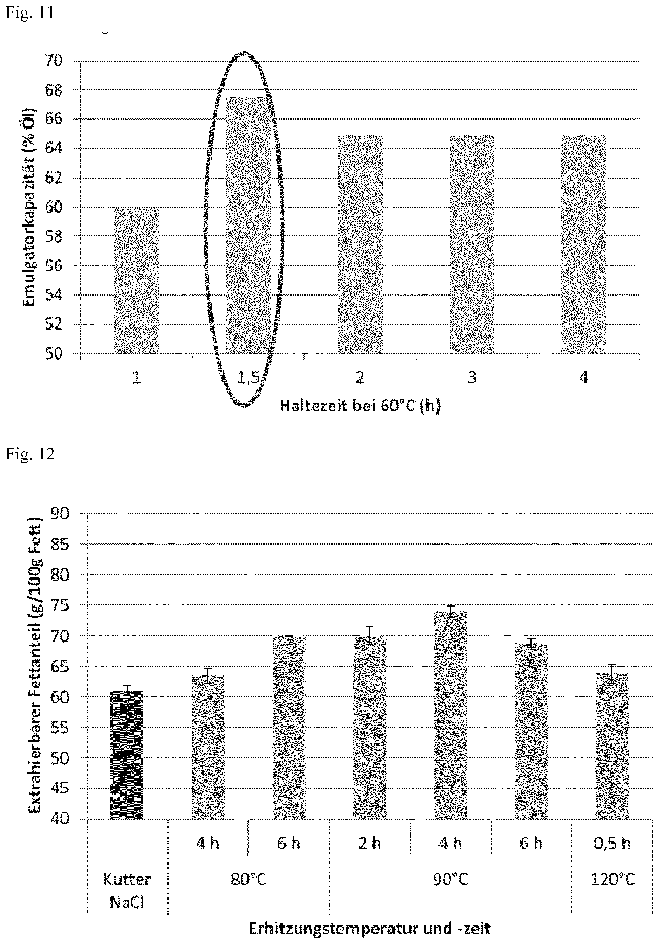

Die Analyse der Grenzflächenspannung des wässrigen Überstands nach erster Wärmebehandlung bei 60°C für 1h bis 4h zeigt, dass bei einer Behandlungszeit von 1,5h der optimale (minimale) Gleichgewichtswert erreicht wird und auch ein geringer Wert der Grenzflächenspannung für die erste wärmebehandelte zerkleinerte Geflügelhaut erreicht wird. Die Ergebnisse sind in Figur 10 (Gleichgewicht linke Säule, Minimum rechte Säule) gezeigt. Figur 11 zeigt die Ergebnisse der Messung der Emulgatorkapazität für diese erste wärmebehandelte zerkleinerte Geflügelhaut. Die erste Wärmebehandlung bei 60°C für ca. 1,5h zeigt die höchste Emulgatorkapazität.

Das Emulgieren der ersten wärmebehandelten zerkleinerten Geflügelhaut erfolgte durch Feinvermahlung mittels eines Rotor-Stator-Dispergierers (1000 Upm, Maschine, Kotthoff LDF), bis die Emulsion eine helle Farbe aufweist, ca. für 2min.

Das Gel wurde durch Wolfen der rohen Geflügelhaut, wie sie zur Erzeugung der Emulsion eingesetzt wurde, zerkleinert und 1:1 Vol. mit 0,95 Gew.-% Salz (NaCl) in Wasser vermischt, um die zweite zerkleinerte Geflügelhaut zu erzeugen, die anschließend einer zweiten Wärmebehandlung bei 70°C, 80°C oder 90°C jeweils für 2h, 4h oder 6h unterworfen wurde, um die zweite wärmebehandelte zerkleinerte Geflügelhaut zu erzeugen und anschließende Zerkleinerung dieser hergestellt. Diese Endzerkleinerung erfolgte mittels einer Labormühle (Fa. BlendTec).

Die Druckfestigkeit wird generell bei 20°C bestimmt, z.B. durch Messen der Kraft, die für das Eindrücken eines Kunststoffzylinders um 4mm in die Probe erforderlich ist. Die Druckfestigkeit ist der Druck, der der aufgewandten Kraft pro Stirnfläche des Zylinders entspricht, vorliegend rund, mit 12,7mm Durchmesser.

Die Analyse der Druckfestigkeit (Messung der Kraft zum Eindrücken eines Kunststoffzylinders mit 12,7mm Durchmesser bis 4mm, bestimmt als Kraft pro Zylinderquerschnittsftäche) des abzentrifugierten wässrigen Überstands der zweiten wärmebehandelten Geflügelhaut zeigte nach Gelieren durch Kühlen Maxima für eine zweite Wärmebehandlung auf 90°C für 4h (ca. 1800Pa) und für 80°C für 4h (ca. 1900Pa).

Figur 12 zeigt die Ergebnisse der Analyse des aus dem abgekühlten Gel extrahierbaren Fetts im Vergleich zu zweiter zerkleinerter roher Geflügelhaut (Kutter NaCl). Es wird deutlich, dass die zweite Wärmebehandlung bei höheren Temperaturen und für längere Zeiten die Emulgiereigenschaften verschlechtert. Bevorzugt ist daher eine zweite Wärmebehandlung auf 75°C bis 85°C, bevorzugt 80°C, für 3h bis 5h, insbesondere 4h.

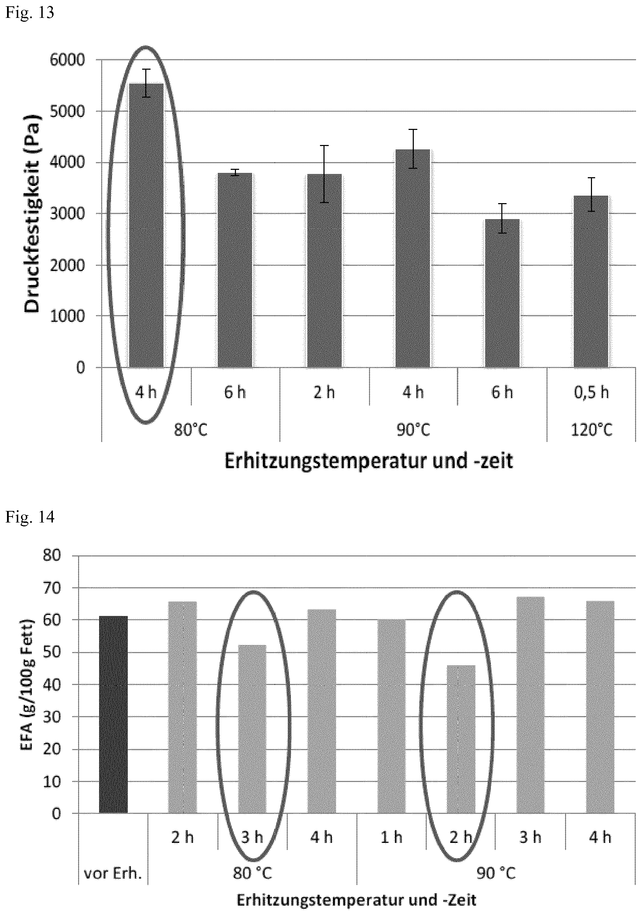

Die Druckfestigkeit des abgekühlten Gels, in Figur 13 gezeigt, zeigt durch die zweite Wärmebehandlung deutlich erhöhte Werte gegenüber der zweiten zerkleinerter rohen Geflügelhaut. Bevorzugt erfolgt die zweite Wärmebehandlung für eine hohe Druckfestigkeit daher bei 75°C bis 85°C, bevorzugt 80°C, für 3h bis 5h, insbesondere 4h.

Der extrahierbare Fettanteil (extrahiertes Fett/Gesamtfett in %) des abgekühlten Gels aus zweiter wärmebehandelter Geflügelhaut im Vergleich mit nicht wärmebehandelter zweiter zerkleinerter roher Geflügelhaut ist in Figur 14 gezeigt. Dieses Ergebnis macht deutlich, dass auch bei der zweiten Wärmebehandlung bei 80°C für 3h oder 90°C für 2h das Fett gut in die Matrix eingebunden ist und entsprechend wenig extrahierbar ist.

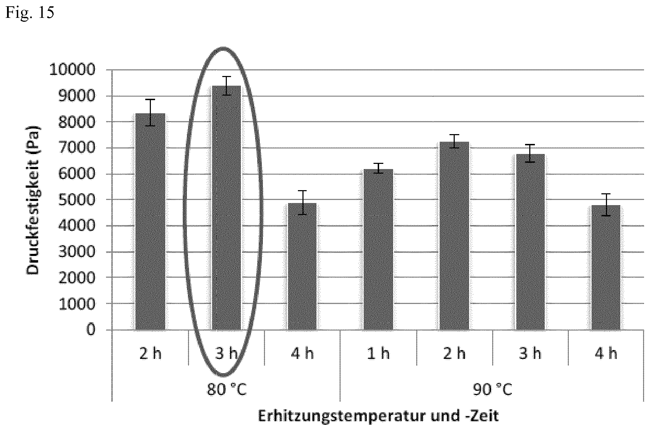

Figur 15 zeigt die Druckfestigkeit der wärmebehandeltem zweiten zerkleinerten Geflügelhaut in Abhängigkeit von der zweiten Wärmebehandlung. Die größte Festigkeit für das abgekühlte Gel wird für die zweite Wärmebehandlung auf 80°C für 3h gemessen.

Ein Vergleich der Messwerte von Figuren 12 und 14 bzw. Figuren 13 und 15 für jeweils gleiche Verfahrensparameter zeigt, dass sich für verschiedene Chargen Geflügelhaut Schwankungen ergeben.

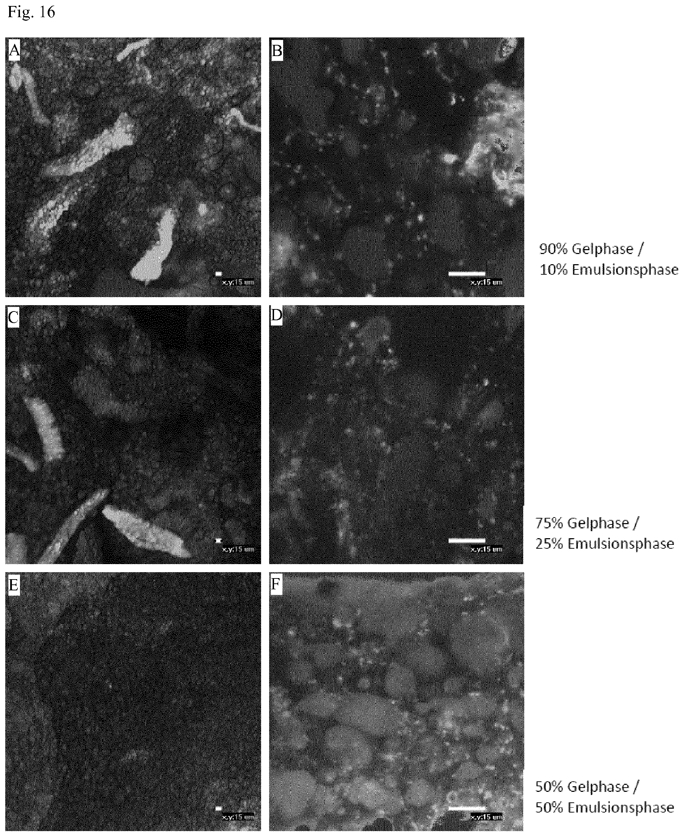

Die Emulsion und die Gelvorstufe wurden auf je 60°C temperiert und zu 90% Gelvorstufe + 10% Emulsion, 75% Gelvorstufe + 25% Emulsion bzw. 50% Gelvorstufe + 50% Emulsion gemischt und in flachen Gefäßen gekühlt. Das dadurch erhaltene Geflügelfetterzeugnis zeigt nach Anfärbung von Protein mit FITC (Absorption bei 492nm, Emission 520nm, grün) und von Fett mit Nilrot (Absorption bei 554nm, Emission bei 606nm, rot) in der konfokalen Laserrastermikroskopie bei Anregung mit 488nm und 514nm oder 488nm, 568nm und 647nm eine gleichmäßige Verteilung von Fett überwiegend in Tropfenform und eine gleichmäßige Verteilung von Protein mit nur einem sehr geringen Anteil denaturierten Proteins. Die mikroskopischen Aufnahmen sind in Fig. 16 gezeigt, in A) und B) für 90% Gel + 10% Emulsion, in C) und D) für 75% Gel + 25% Emulsion und in E) und F) für je 50% Gel + Emulsion bei verschiedenen Vergrößerungen.

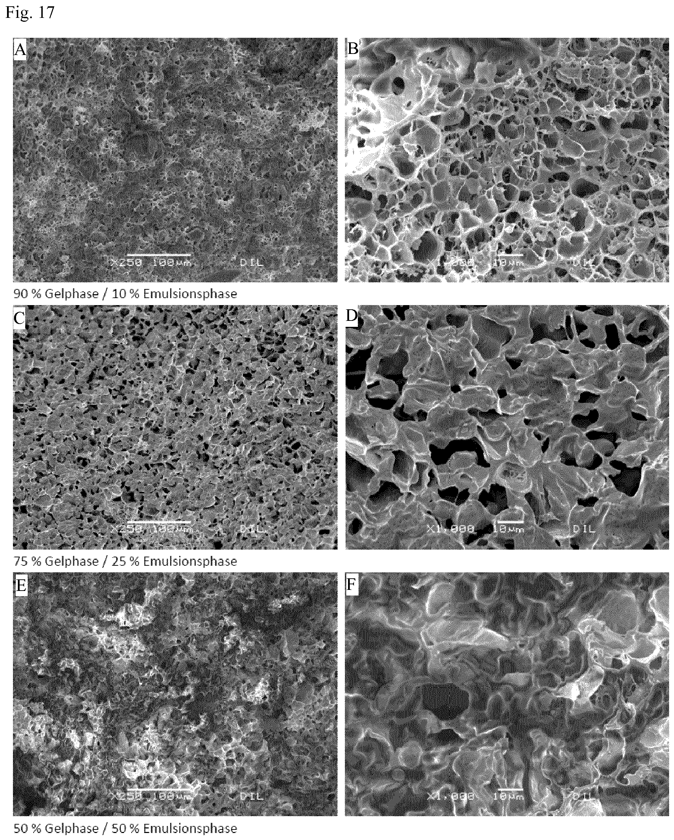

Figur 17 zeigt rasterelektronenmikroskopische Aufnahmen (Proben in flüssigem Stickstoff gefroren, mittels Kryopräparation gebrochen, freies Wasser bei -10°C sublimiert und mit Gold bedampft, Aufnahme bei -185°C im Vakuum) des Geflügelfetterzeugnisses, in A) und B) für 90% Gel + 10% Emulsion, in C) und D) für 75% Gel + 25% Emulsion und in E) und F) für je 50% Gel + Emulsion bei verschiedenen Vergrößerungen. Die Aufnahmen zeigen, dass bei 10% Emulsion die Proteinnetzwerkstruktur des Gels im Wesentlichen erhalten ist, wird diese Struktur mit zunehmendem Anteil an Emulsion kompakter. Bei 75% Gel, 25% Emulsion hat das Geflügelfetterzeugnis relativ grobe Abstände bzw. Zwischenräume, die das Austreten von Wasser begünstigen, z.B. bei Kontaktieren mit Salz, und zu einer geringeren Festigkeit führen.

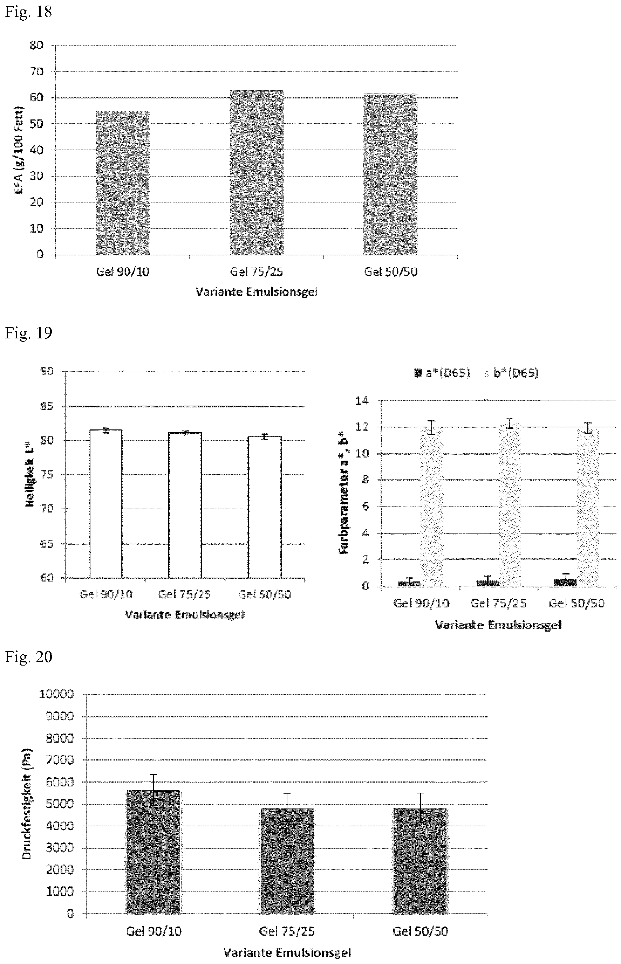

Der extrahierbare Fettanteil ist in Fig. 18 gezeigt. Diese Werte im Bereich von 53% bis 63% vom Gesamtfett zeigen eine hinreichende Stabilisierung des Fetts im Geflügelfetterzeugnis.

Die Ergebnisse der optischen Analyse in Fig. 19 zeigen eine ausreichende Helligkeit und annehmbare Farbe des Geflügelfetterzeugnisses.

Fig. 20 zeigt die Druckfestigkeit des Geflügelfetterzeugnisses der angegebenen Mischungen aus Gel und Emulsion. Die Druckfestigkeit für 25% und 50% Emulsion sind etwa gleich. Dies wird gegenwärtig auf die kompaktere Struktur des Geflügelfetterzeugnisses mit je 50% Gel und Emulsion zurückgeführt.

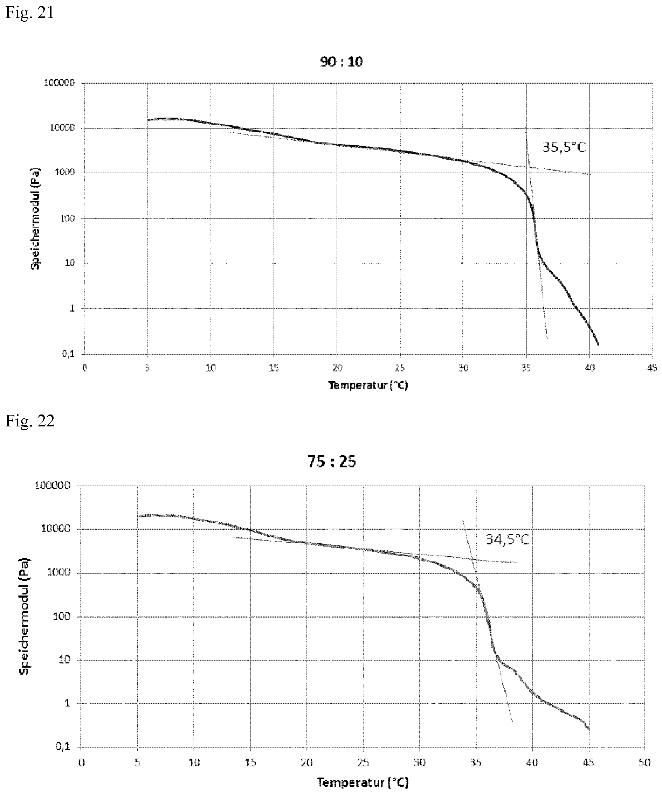

Die Figuren 21, 22 bzw. 23 zeigen die Temperaturstabilitäten der Geflügelfetterzeugnisse, bestimmt als Speichermodul G', das die Spannung für die reversible Dehnung der inneren Struktur des Geflügelfetterzeugnisses darstellt und daher ein Maß für die Festigkeit der unzerstörten Struktur ist. Dabei gibt ein größerer Speichermodul eine größere innere Festigkeit des Geflügelfetterzeugnisses an. Die Messung wurde bei einer Frequenz von 1Hz im Temperaturbereich von 5°C bis 45°C gemessen. Die abgeleiteten Grenztemperaturen der Temperaturstabilität sind jeweils angegeben und zeigen, dass das Geflügelfetterzeugnis thermoreversibel geliert und eine ausreichende Festigkeit aufweist, insbesondere für eine Verarbeitungstemperatur von maximal 5°C und eine Lagertemperatur von maximal 25°C.

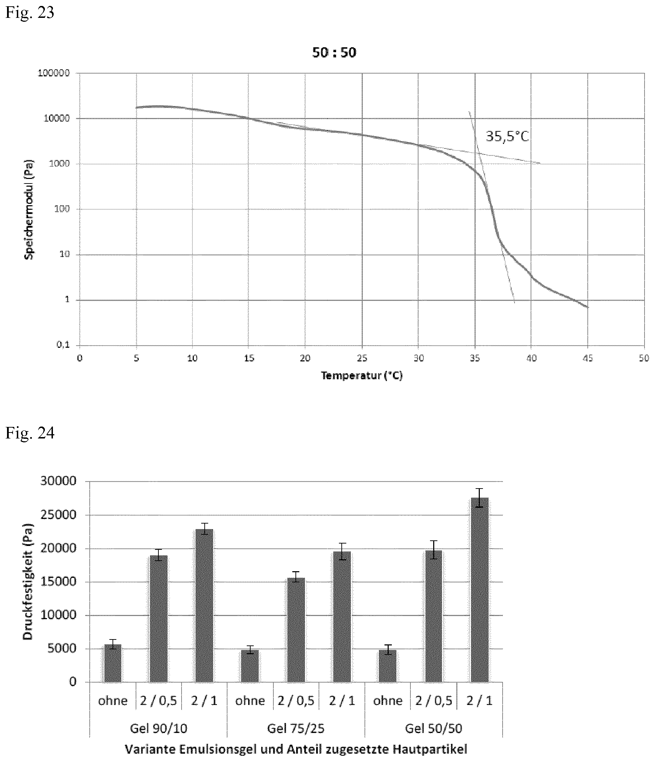

Figur 24 zeigt die Druckfestigkeit des Geflügelfetterzeugnisses der bevorzugten Ausführungsform mit Zumischung von Bindegewebspartikeln, von denen Flüssigkeit abgetrennt wurde. Dabei sind jeweils für 90% Gel + 10% Emulsion, 75% Gel + 25% Emulsion und je 50% Gel + Emulsion die Werte ohne zusätzliche Bindegewebspartikel (ohne), 5 Gew.-% Bindegewebspartikel (2/0,5) bzw. 10 Gew.-% Bindegewebspartikel (2/1) gezeigt. Diese Ergebnisse zeigen, dass durch Zumischen von Bindegewebspartikeln die Druckfestigkeit des Geflügelfetterzeugnisses auf das 4-fache bis 5-fache gesteigert werden kann.

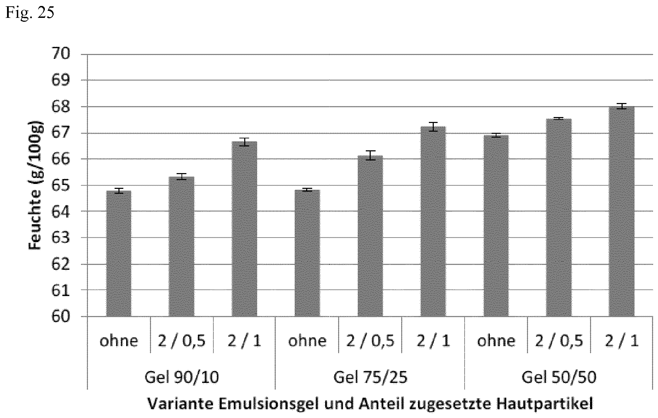

Figur 25 zeigt den Wassergehalt (Feuchte, %) des Geflügelfetterzeugnisses der bevorzugten Ausführungsform mit Zumischung von Bindegewebspartikeln. Die Proben entsprechen denjenigen von Figur 24. Die gemessenen Werte (Trocknung bei 105°C bis zur Massekonstanz) zeigen einen im Vergleich zu Schweinespeck um ca. 15% bis 18% höheren Wassergehalt für das Geflügelfetterzeugnis.

## Patentansprüche

1. Verfahren zur Herstellung eines Geflügelfetterzeugnisses mit den Schritten
- der Zerkleinerung einer ersten rohen Geflügelhaut in Mischung mit Wasser zur Erzeugung einer ersten zerkleinerten rohen Geflügelhaut,
- einer ersten Wärmebehandlung der ersten zerkleinerten rohen Geflügelhaut bei 55°C bis 65°C für 1 bis 2h zur Erzeugung erster wärmebehandelter zerkleinerter Geflügelhaut,
- des Emulgierens der ersten wärmebehandelten zerkleinerten Geflügelhaut durch Feinvermahlung zur Herstellung einer Emulsion,
- der Zerkleinerung einer zweiten rohen Geflügelhaut zur Erzeugung einer zweiten zerkleinerten rohen Geflügelhaut und Mischen mit Wasser,
- einer zweiten Wärmebehandlung der zweiten zerkleinerten rohen Geflügelhaut bei 75°C bis 85°C für 1 bis 5h zur Erzeugung einer zweiten wärmebehandelten zerkleinerten Geflügelhaut,
- der Zerkleinerung der zweiten wärmebehandelten zerkleinerten Geflügelhaut zur Herstellung einer Gelvorstufe
- Temperieren der Emulsion und der Gelvorstufe auf eine Temperatur mit einer Abweichung um maximal 5°C und Mischen der Emulsion und der Gelvorstufe, wobei die Temperatur 30°C bis 60°C beträgt, zur Erzeugung einer Mischung von Emulsion und Gelvorstufe und
- Kühlen der Mischung von Emulsion und Gelvorstufe.

2. Verfahren nach Anspruch 1, **dadurch gekennzeichnet, dass** die Zerkleinerung der ersten Geflügelhaut durch Wolfen, anschließendes Mischen mit dem Wasser und Kuttern bei ca. 0 bis 10°C erfolgt.

3. Verfahren nach einem der voranstehenden Ansprüche, **dadurch gekennzeichnet, dass** dem Wasser der ersten und/oder zweiten rohen Geflügelhaut 0,7 bis 2 Gew.-% Salz zugesetzt sind.

4. Verfahren nach einem der voranstehenden Ansprüche, **dadurch gekennzeichnet, dass** der der ersten und/oder zweiten rohen Geflügelhaut Wasser in einem Gewichtsanteil von 1:0,5 bis 1:2 zugesetzt wird.

5. Verfahren nach einem der voranstehenden Ansprüche, **dadurch gekennzeichnet, dass** die Zerkleinerung der zweiten rohen Geflügelhaut durch Wolfen und anschließendes Mischen mit Wasser und Kuttern erfolgt.

6. Verfahren nach einem der voranstehenden Ansprüche, **dadurch gekennzeichnet, dass** die zweite Wärmebehandlung für ca. 2,5h bis 3,5h erfolgt.

7. Verfahren nach einem der voranstehenden Ansprüche, **dadurch gekennzeichnet, dass** Bindegewebspartikel durch Garen von zerkleinerter Geflügelhaut in Wasser oder Dampf mit anschließendem Abtrennen von Flüssigkeit erzeugt werden und diese Bindegewebspartikel der Mischung von Emulsion und Gelvorstufe vor dem Kühlen zugemischt werden.

8. Verfahren nach einem der voranstehenden Ansprüche, **dadurch gekennzeichnet, dass** die gekühlte Mischung von Emulsion und Gelvorstufe nach dem Gelieren mit Salz kontaktiert wird und austretende Flüssigkeit von der gekühlten Mischung abgetrennt wird.

9. Verfahren nach einem der voranstehenden Ansprüche, **dadurch gekennzeichnet, dass** die gekühlte Mischung von Emulsion und Gelvorstufe zerkleinert, mit zerkleinertem Geflügelmagerfleisch und Lebensmittelzusatzstoffen gemischt und abgefüllt wird.

10. Geflügelfetterzeugnis, erhältlich nach einem Verfahren nach einem der voranstehenden Ansprüche.

11. Geflügelfetterzeugnis nach Anspruch 10, **gekennzeichnet durch** eine Druckfestigkeit bei 20°C, bestimmt durch Messen der Kraft, die für das Eindrücken eines Kunststoffzylinders um 4mm in die Probe erforderlich ist, als der Druck, der der aufgewandten Kraft pro Stirnfläche des Zylinders, rund mit 12,7mm Durchmesser, entspricht, von zumindest 4800Pa, einen Helligkeitswert L*, gemessen mittels Spektralphotometer CM-600d, Konica-Minolta bei Normlicht D65, von zumindest 80 und einen extrahierbaren Fettanteil, gemessen durch Mischen und Ausschütteln mit Lösungsmittel, bevorzugt Petroleumbenzin, anschließendes Abfiltrieren, wobei extrahiertes Fett nach Verdampfen des Lösungsmittels bestimmt wird, von maximal 65%.

12. Geflügelfetterzeugnis nach einem der Ansprüche 10 bis 11, **gekennzeichnet durch** eine Druckfestigkeit von mindestens 22000Pa und eine Erweichungstemperatur von mindestens 34°C.

13. Verwendung von roher Geflügelhaut als erste und zweite rohe Geflügelhaut in einem Verfahren nach einem der Ansprüche 1 bis 9.

## Claims

1. Process for producing a poultry fat product comprising the steps of
- comminuting a first raw poultry skin in admixture with water for producing a first comminuted raw poultry skin,
- a first heat treatment of the first comminuted raw poultry skin at 55 °C to 65 °C for 1 to 2 hours for producing a first heat - treated comminuted poultry skin,
- of emulsifying the first heat - treated comminuted poultry skin by fine milling for producing an emulsion,
- of comminuting a second raw poultry skin for producing a second comminuted raw poultry skin and admixing with water,
- a second theat treatment of the second comminuted raw poultry skin at 75 °C to 85 °C for 1 to 5 hours for producing a second heat - treated comminuted poultry skin,
- of comminuting the second heat - treated comminuted poultry skin for producing a gel precursor,
- temperature-adjusting the emulsion and the gel precursor to a temperature of a deviation of at maximum 5 °C and mixing the emulsion and the gel precursor, wherein the temperature amounts to 30 °C to 60 °C, for producing a mixture of emulsion and gel precursor, and
- cooling the mixture of emulsion and gel precursor.

2. Process according to claim 1, **characterized in that** comminuting the first poultry skin is by mincing, subsequent admixing with water and bowl-cutting at approximately 0 to 10 °C.

3. Process according to one of the preceding claims, **characterized in that** 0.7 to 2 wt.-% salt are added to the water of the first and/or second raw poultry skin.

4. Process according to one of the preceding claims, **characterized in that** water is added at a weight proportion of 1:0.5 to 1:2 to the first and/or second raw poultry skin.

5. Process according to one of the preceding claims, **characterized in that** comminuting of the second raw poultry skin is by mincing and subsequent mixing with water and bowl-cutting.

6. Process according to one of the preceding claims, **characterized in that** the second heat treatment is for approximately 2.5 hours to 3.5 hours.

7. Process according to one of the preceding claims, **characterized in that** particles of connective tissue are produced by cooking of comminuted poultry skin in water or steam with subsequent separation of liquid, and that these connective tissue particles are admixed to the mixture of emulsion and precursor prior to the cooling.

8. Process according to one of the preceding claims, **characterized in that** the cooled mixture of emulsion and gel precursor after the gelation is contacted with salt and leaking liquid is separated from the cooled mixture.

9. Process according to one of the preceding claims, **characterized in that** the cooled mixture of emulsion and gel precursor is comminuted, mixed with comminuted poultry lean meat and food additives and is filled in portions.

10. Poultry fat product, obtainable by a process according to one of the preceding claims.

11. Poultry fat product according to claim 10, **characterized by** a pressure resistance at 20 °C, determined by measuring the force necessary for pressing a plastic cylinder by 4 mm into the sample as the pressure corresponding to the applied force per face surface of the cylinder, round with a diameter of 12.7 mm, of at least 4,800 Pa, a brightness value L*, measured by means of a spectro photometer CM-600d, Konika Minolta, at standard light D65, of at least 80, and an extractable fat proportion, measured by mixing and shaking out with a solvent, preferably petroleum benzin, subsequent filtration, wherein extracted fat is determined after evaporating the solvent, of at maximum 65%.

12. Poultry fat product according to one of claims 10 to 11, **characterized by** a pressure resistance of at least 22,000 Pa and a softening temperature of at least 34 °C.

13. Use of raw poultry skin as a first and a second raw poultry skin in a process according to one of claims 1 to 9.

## Revendications

1. Procédé de production d'un produit de graisse de volaille comprenant les étapes:
- à concasser une première peau de volaille crue en mélange avec de l'eau pour produire une première peau de volaille crue concassée,
- à réaliser un premier traitement thermique de la première peau de volaille concassée finement à 55°C à 65°C pendant 1 à 2 heures pour produire la première peau de volaille concassée traitée thermiquement,
- à émulsifier la première peau de volaille concassée thermisée par broyage fin pour produire une émulsion,
- à concasser une seconde peau de volaille crue pour produire une seconde peau de volaille concassée et mélangée avec de l'eau,
- à réaliser un second traitement thermique de la seconde peau de volaille concassée à 75°C à 85°C pendant 1 à 5 heures pour produire une seconde peau de volaille concassée,
- à concasser la seconde peau de volaille concassée traitée thermiquement pour produire un précurseur de gel;
- tremper l'émulsion et le précurseur de gel à une température avec un écart maximal de 5°C et le mélange de l'émulsion et du précurseur de gel, dans lequel la température est de 30°C à 60°C, pour produire un mélange d'émulsion et de précurseur de gel et
- refroidir le mélange d'émulsion et de précurseur de gel.

2. Procédé selon la revendication 1, **caractérisé en ce que** le concassage de la première peau de volaille par broyage, puis mélange avec l'eau et hachage à environ 0 à 10°C.

3. Procédé selon l'une des revendications précédentes, **caractérisé en ce que** l'on ajoute de l'eau à la première peau de volaille crue et/ou à la seconde peau de volaille crue à hauteur de 0,7 à 2% en poids de sel.

4. Procédé selon l'une des revendications précédentes, **caractérisé en ce que** l'on ajoute de l'eau à la première peau de volaille crue et/ou à la seconde peau de volaille crue dans une proportion de 1:0,5 à 1:2.

5. Procédé selon l'une des revendications précédentes, **caractérisé en ce que** le concassage de la seconde peau de volaille crue est effectué par broyage et mélange subséquent avec de l'eau, puis hachage.

6. Procédé selon l'une des revendications précédentes, **caractérisé en ce que** le second traitement thermique a lieu pendant environ 2,5 heures à 3,5 heures.

7. Procédé selon l'une des revendications précédentes, **caractérisé en ce que** les particules de tissu conjonctif sont produites par cuisson de peau de volaille concassée dans de l'eau ou de la vapeur avec séparation subséquente du liquide et additionnées de ces particules de tissu conjonctif au mélange d'émulsion et de précurseur de gel avant refroidissement.

8. Procédé selon l'une des revendications précédentes, **caractérisé en ce que** le mélange refroidi d'émulsion et de précurseur de gel est mis en contact après gélification avec du sel et que le liquide sortant est séparé du mélange refroidi.

9. Procédé selon l'une quelconque des revendications précédentes, **caractérisé en ce que** le mélange refroidi d'émulsion et de précurseur de gel est concassé, mélangé à de la viande maigre de volaille concassée et à des additifs alimentaires, puis mise en bocaux.

10. Produit de graisse de volaille, que l'on obtient par un procédé selon l'une des revendications précédentes.

11. Produit de graisse de volaille selon la revendication 10, **caractérisé par** une résistance à la compression à 20°C, déterminée en mesurant la force nécessaire pour pousser un cylindre en plastique de 4 mm dans l'échantillon, tandis que la pression correspondant à la force appliquée par face du cylindre, circulaire 12,7mm de diamètre, d'au moins 4800Pa, une valeur de luminosité L* mesurée par un spectrophotomètre CM-600d, Konica-Minolta à la lumière standard D65, d'au moins 80 et une teneur en matière grasse extractible, mesurée par mélange et agitation avec un solvant, de préférence de l'essence minérale, suivie d'une filtration, dans lequel la graisse extraite est déterminée après évaporation du solvant, d'un maximum de 65%.

12. Produit de graisse de volaille selon l'une quelconque des revendications 10 ou 11, **caractérisé par** une résistance à la compression d'au moins 22000 Pa et une température de ramollissement d'au moins 34°C.

13. Utilisation de la peau de volaille crue comme première peau de volaille crue et seconde peau de volaille crue dans un procédé selon l'une quelconque des revendications 1 à 9.
